(19) Europäisches Patentamt
European Patent Office
Office européen des brevets

(11) EP 3 146 297 B1

(12) # EUROPÄISCHE PATENTSCHRIFT

(45) Veröffentlichungstag und Bekanntmachung des Hinweises auf die Patenterteilung:
**14.08.2019 Patentblatt 2019/33**

(21) Anmeldenummer: **15724175.3**

(22) Anmeldetag: **15.05.2015**

(51) Int Cl.:
***G01D 5/244*** *(2006.01)*

(86) Internationale Anmeldenummer:
**PCT/EP2015/001004**

(87) Internationale Veröffentlichungsnummer:
**WO 2015/176810 (26.11.2015 Gazette 2015/47)**

(54) **VERFAHREN ZUM ERMITTELN EINER BEWEGUNG EINES OBJEKTS**

METHOD FOR ASCERTAINING A MOVEMENT OF AN OBJECT

PROCÉDÉ PERMETTANT DE DÉTERMINER UN MOUVEMENT D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2014 DE 102014007631**

(43) Veröffentlichungstag der Anmeldung:
**29.03.2017 Patentblatt 2017/13**

(73) Patentinhaber: **Audi AG**
**85045 Ingolstadt (DE)**

(72) Erfinder:
- **ADAM, Martin**
  **01662 Meißen (DE)**
- **SACHER, Jens**
  **85057 Ingolstadt (DE)**

(74) Vertreter: **Askaryar, Jama**
**Audi AG**
**Patentabteilung**
**85045 Ingolstadt (DE)**

(56) Entgegenhaltungen:
**DE-A1- 10 049 502**
**DE-A1- 10 052 609**
**DE-A1- 19 749 791**
**DE-A1-102009 022 084**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 146 297 B1

## Beschreibung

Die Erfindung betrifft ein Verfahren und ein System zum Ermitteln einer Bewegung eines Objekts.

Eine derartige, bspw. kreisförmige Bewegung des Objekts kann durch Gleichungen mathematisch beschrieben werden.

Ein Verfahren zur fehlerkompensierten Auswertung eine Sinus-Kosinus-Lagemesssystems ist aus der Druckschrift DE 101 63 528 B4 bekannt. Hierbei werden Messwerte einer Kosinus-Spur (x) und einer Sinus-Spur (y) ermittelt und ein Offset, ein Amplitudenfehler und ein Phasenfehler als Fehlerparameter aus den ermittelten Messwerten bestimmt, wobei die Fehlerparameter für eine Auswertung einer Feinlage des Lagemesssystems kompensiert werden. Außerdem werden die Fehlerparameter anhand einer Ellipsengleichung in einem x/y-Zustandsraum des Sinus-Kosinus-Lagemesssystems bestimmt.

Ein Verfahren zur Bestimmung der Winkelstellung eines drehbaren Teils ist aus der Druckschrift DE 10 2009 022 084 A1 bekannt. Hierbei werden mit zumindest zwei Sensoren Signalverläufe bei der Drehung des drehbaren Teils erfasst. Außerdem werden für die Signalverläufe unterschiedliche Korrekturen vorgenommen.

Die Druckschrift DE 100 49 502 A1 beschreibt ein Verfahren zur absoluten Positionsbestimmung zweier zueinander beweglicher Objekte über eine bestimmte Messdistanz. Hierbei werden aus einer Abtastung eine erste Messteilung mit ersten periodischen Abtastsignalen und eine zweite Messteilung mit zweiten Abtastsignalen erzeugt. Weiterhin werden die ersten und die zweiten Abtastsignale in Bezug auf eine ideale Phasenlage zueinander korrigiert.

Ein Verfahren zur Kompensation einer Offset-Drift eines Winkelmessers ist in der Druckschrift DE 100 52 609 A1 beschrieben. Ein Sensorelement des Winkelmessers tastet einen an einer Welle angeordneten Geber ab, wobei das Sensorelement entsprechend des Drehwinkels der Welle ein sinus- und cosinusförmiges Signal an eine Auswerteeinheit liefert, die den Drehwinkel aus den empfangenen Signalen durch eine Arcus-Tangens-Bildung bestimmt, wobei die Auswerteeinheit einen Algorithmus aufweist.

Vor diesem Hintergrund werden ein Verfahren und ein System mit den Merkmalen der unabhängigen Patentansprüche vorgestellt. Ausgestaltungen des Verfahrens und des Systems ergeben sich aus den abhängigen Patentansprüchen.

Das erfindungsgemäße Verfahren ist zum Ermitteln einer mechanischen Bewegung eines Objekts, das sich um eine Achse, die das Objekt schneidet, dreht und dabei in Abhängigkeit der Zeit einen mechanischen Winkel $\Theta_m(t)$ einnimmt, vorgesehen. Dabei wird mindestens eine Signalgleichung verwendet, die die drehende Bewegung beschreibt, wobei für die mindestens eine Signalgleichung mindestens ein Fehlerparameter definiert und eine mechanische Periode der drehenden Bewegung in mehrere bzw. p elektrische Signalperioden aufgeteilt wird. Für jede elektrische Signalperiode der mechanischen Periode wird mindestens ein Wert für den mindestens einen Fehlerparameter individuell bestimmt, in der Regel berechnet. Außerdem wird für jede elektrische Signalperiode aus dem mindestens einen Wert für den mindestens einen Fehlerparameter ein Mittelwert als Kompensationsparameter gebildet. Weiterhin wird ein Kompensationsparameter einer i-ten elektrischen Signalperiode innerhalb der mechanischen Periode mit einem Kompensationsparameter einer b-ten benachbarten elektrischen Signalperiode, d. h. entweder einer i-1-ten oder einer i+1+ten Signalperiode interpoliert und/oder gewichtet. Bei einer Kompensation wird für jeden Kompensationsparameter der i-ten elektrischen Signalperiode ein Gewichtungsanteil $Gi(\Theta_e)$ verwendet, der von einem elektrischen Winkel $\Theta_e(t)$ innerhalb der elektrischen i-ten Signalperiode abhängig ist.

In der Regel werden von einem Sensor ein Sinus-Signal und ein Kosinus-Signal gemessen und somit erfasst und daraus der mechanische Winkel $\Theta_m(t)$ berechnet. Der reale mechanische Winkel $\Theta_m(t)$ kann unter Berücksichtigung von Kompensationsparametern, die aus den Fehlerparametern im Rahmen des Verfahrens abgeleitet werden, ermittelt werden.

Hierbei wird durch den mechanischen Winkel $\Theta_m(t)$ eine Position des Objekts beschrieben. Eine Periode des mechanischen Winkels $\Theta_m(t)$ wird bei Durchführung des Verfahrens in die p elektrischen Signalperioden aufgeteilt. Winkel, die sich auf die elektrischen Signalperioden beziehen, werden als elektrische Winkel $\Theta_e(t)$ bezeichnet. So weist eine mechanische Periode ein Zeitintervall $T_m$ auf, während dem der mechanische Winkel $\Theta_m(t)$ von 0° bis 360° läuft. Eine mechanische Periode umfasst p elektrische Signalperiode, wobei jeweils einer elektrischen Signalperiode der elektrische Winkel $\Theta_e(t)$ zuzuordnen ist.

Der elektrische Winkel $\Theta_e(t)$ nimmt während jeweils einer elektrischen Signalperiode ebenfalls sämtliche Werte von 0° bis 360° an. Für den mechanischen Winkel $\Theta_m(t)$ sowie den elektrischen Winkel $\Theta_e(t)$ werden in Ausgestaltung unterschiedliche zeitabhängige Skalen benutzt. Falls eine vollständige Drehung des Objekts die mechanische Periode mit dem mechanischen Zeitintervall $T_m$ andauert, während dem das Objekt einen mechanischen Winkel $\Theta_e(t)$ von 360° durchläuft, sind p elektrische Signalperioden vorgesehen, die jeweils ein elektrisches Zeitintervall $T_e = T_m/p$ andauern, während dem der elektrische Winkel $\Theta_e(t)$ in jeder der p elektrischen Signalperioden von 0° bis 360° läuft.

In Ausgestaltung wird aus dem mindestens einen Wert für den mindestens einen Fehlerparameter ein gleitender Mittelwert als Kompensationsparameter über mindestens eine vergangene mechanische Periode bzw. Umdrehung gebildet. Ein Kompensationsparameter, der für jeweils eine elektrische Signalperiode einer mechanischen Periode vorgesehen ist, kann aus gewichteten Werten eines Fehlerparameters dieser elektrischen Signalperiode abgeleitet werden. Ein derartiger Kompensationsparameter kann aktualisiert werden, wobei aus mehreren, üblicherweise vier Kompensationsparametern für jede elektrische Signalperiode individuell und/oder für sämtliche elektrische Signalperioden der mechanischen Periode ein Satz aktualisierter Kompensationsparameter bereitgestellt werden kann, auf die bei Durchführung des Verfahrens zurückgegriffen werden kann.

Als erste Signalgleichung wird eine Gleichung für ein Sinus-Signal $u_{sin}$ (t) = $Q_{amp}$ * $u_0$ * sin ($\Theta_m$(t)) + $\Delta u_s$ und als zweite Signalgleichung eine Gleichung für ein Kosinus-Signal $u_{cos}$ (t) = $u_0$ * cos ($\Theta_m$(t)+ $\Delta\varphi$) + $\Delta u_c$ verwendet, wobei als Fehlerparameter eine Abweichung $Q_{amp}$ der Amplituden, ein jeweiliger Offset $\Delta u_s$ und $\Delta u_c$ sowie eine Phasenverschiebung $\Delta\varphi$ der beiden Signalgleichungen zueinander verwendet werden. Demnach können bei dem Verfahren bis zu vier Fehlerparameter berücksichtigt werden.

In Ausgestaltung wird ein Kompensationsparameter aus modulierten Werten der Fehlerparameter der i-ten elektrischen Signalparameter unter Berücksichtigung der modulierten Werte der Fehlerparameter der benachbarten, b-ten elektrischen Signalperiode bestimmt.

Bei der Kompensation wird außerdem der Kompensationsparameter der i-ten elektrischen Signalperiode für einen Bereich des elektrischen Winkels $\Theta_e$(t) größer als 0° und kleiner gleich 180° mit dem Kompensationsparameter der vorhergehenden i-1-ten elektrischen Signalperiode und für einen Bereich des elektrischen Winkels $\Theta_e$(t) größer als 180° und kleiner gleich 360° mit dem Kompensationsparameter der nachfolgenden i+1-ten elektrischen Signalperiode interpoliert und somit gewichtet.

In einem jeweiligen Bereich des elektrischen Winkels $\Theta_e$(t) für eine Summe aus dem Gewichtungsanteil Gi($\Theta_e$) der i-ten elektrischen Signalperiode und dem Gewichtungsanteil $G_b$($\Theta_e$) der mindestens einen benachbarten b-ten elektrischen Signalperiode gilt winkelabhängig: Gi($\Theta_e$) + $G_b$($\Theta_e$) = 1.

In einer möglichen Ausgestaltung gilt in dem Bereich des elektrischen Winkels $\Theta_e$ (t) größer als 0° und kleiner gleich 180° für den Gewichtungsanteil $G_i$($\Theta_e$) der i-ten Signalperiode: $G_i$($\Theta_e$) = 0,5 + $\Theta_e$ /360° und für den Gewichtungsanteil der vorhergehenden i-1-ten elektrischen Signalperiode: $G_{i-1}$($\Theta_e$) = 0,5 - $\Theta_e$/360°. In dem Bereich des elektrischen Winkels $\Theta_e$ größer als 180° und kleiner gleich 360° gilt für den Gewichtungsanteil $G_i$($\Theta_e$) der i-ten Signalperiode: $G_i$($\Theta_e$) = 1,5 - $\Theta_e$ /360° und für den Gewichtungsanteil der nachfolgenden i+1-ten elektrischen Signalperiode: $G_{i+1}$($\Theta_e$)=-0,5+$\Theta_e$/360°.

Einzelne elektrische Signalperioden können anhand eines Vorzeichenwechsels erkannt werden. Dabei erfolgt ein Wechsel von Werten des Sinus-Signals $u_{sin}$(t) gemäß einem üblichen Verlauf einer Sinus-Kurve von negativen zu positiven Werten, wobei das Sinus-Signal $u_{sin}$(t) bei einem Übergang zwischen zwei elektrischen Signalperioden einen Nullpunkt durchläuft. Dies ist in Ausgestaltung anhand der vorab kompensierten gemessenen Werte statt der rohen Messwerte für das Sinus- und Kosinus-Signal möglich. Danach werden eine Gewichtung der Fehlerparameter und eine Kompensation durchgeführt.

Die Fehlerparameter können über eine Ellipsenapproximation oder andere Algorithmen zum Bestimmen von Fehlerparametern als eine mögliche Methode individuell für jede elektrische Signalperiode bestimmt bzw. berechnet werden.

Das erfindungsgemäße System umfasst eine Recheneinheit und ist zum Ermitteln einer Bewegung eines Objekts, das sich um eine Achse, die das Objekt schneidet, dreht und dabei einen mechanischen Winkel $\Theta_m$(t) einnimmt, ausgebildet. Die Recheneinheit ist dazu ausgebildet, beide Signalgleichungen also jene für das Sinus-Signal $u_{sin}$(t) und jene für das Cosinus-Signal $u_{cos}$(t), zu verwenden, die die drehende Bewegung beschreiben, für die mindestens eine Signalgleichung mindestens einen Fehlerparameter, in der Regel vier Fehlerparameter, zu definieren, eine mechanische Periode der drehenden Bewegung in p elektrische Signalperioden aufzuteilen, für jede elektrische Signalperiode der mechanischen Periode mindestens einen Wert für den mindestens einen Fehlerparameter individuell zu bestimmen und/oder zu berechnen und für jede elektrische Signalperiode aus dem mindestens einen Wert für den mindestens einen Fehlerparameter einen gleitenden Mittelwert als Kompensationsparameter zu bilden.

Das System kann einen Sensor zum Erfassen eines Sinus- und Kosinus-Signals der Bewegung aufweisen, wobei aus Signalgleichungen für das Sinus- und Kosinus-Signal der mechanische Winkel $\Theta_m$(t) des Objekts zu berechnen ist.

Die Recheneinheit ist dazu ausgebildet, mindestens einen Schritt eines vorausstehend und nachfolgend beschriebenen Verfahrens durchzuführen.

Mit dem Verfahren ist bspw. eine Kompensation modulierter Fehler eines Sinus-/Kosinus-Lagemesssystems durch eine periodenindividuelle Berechnung von Fehlerparametern und durch eine winkelabhängige Gewichtung der Fehlerparameter der benachbarten elektrischen Signalperioden umzusetzen.

Für das Sinus-Signal und das Kosinus-Signal können nachfolgende Signalgleichungen verwendet werden:

$$u_{sin}(t) = Q_{amp} * u_0 * \sin(\Theta_m(t)) + \Delta u_s \qquad (1)$$

$$u_{cos}(t) = u_0 * \cos(\Theta_m + \Delta\varphi(t)) + \Delta u_c \quad (2)$$

Signale eines Sinus-/Kosinus-Lagemesssystem können systembedingt drei Fehlertypen aufweisen. Hierbei ist ein erster Fehlertyp durch ungleiche Amplituden des Sinus-Signals $u_{sin}(t)$ und des Kosinus-Signals $u_{cos}(t)$ bedingt, wobei bei diesem Fehlertyp gemäß der Signalgleichungen $Q_{amp}$ ungleich 1 gilt. Ein weiterer Fehlertyp ist gegeben, wenn ein Offset mindestens eines der Signale, d. h. entweder zumindest des Sinus-Signals und/oder des Kosinus-Signals ungleich 0 ist, so dass $\Delta u_s$ ungleich 0 und/oder $\Delta u_c$ ungleich 0 gilt. Weiterhin kann durch eine Phasenverschiebung zwischen dem Sinus-Signal und dem Kosinus-Signal ungleich 90° bzw. $\Delta\varphi$ ungleich 0 ein dritter Fehlertyp hervorgerufen werden. Diese genannten Fehlertypen können in den oben genannten Signalgleichungen berücksichtigt werden. Außerdem werden durch derartige Fehlertypen Informationen zu dem elektrischen Winkel $\Theta_e(t)$, die aus den Sensorsignalen berechnet werden, verfälscht. Ferner können die Fehlertypen mathematisch durch Fehlerparameter beschrieben werden, die im Rahmen des vorgestellten Verfahrens bestimmt und kompensiert werden können.

Üblicherweise können mechanische Toleranzen des rotierenden Objekts bzw. Bauteils, die bspw. eine Exzentrizität und/oder ein Taumeln des Objekts bei dessen Bewegung zur Folge haben, eine Modulation der Fehlerparameter im Verlauf einer mechanischen Umdrehung dieses Bauteils bewirken. Je nach Ausgestaltung des Objekts und/oder des Lagesystems kann eine mechanische Umdrehung in eine Anzahl p von elektrischen Signalperioden unterteilt werden. Dabei handelt es sich bei p um eine ganze, üblicherweise gerade Zahl. Dabei kann jede elektrische Signalperiode unterschiedliche Fehlerparameter aufweisen. Eine signalperiodenabhängige Variation der Fehlerparameter wird in Ausgestaltung des beschriebenen Verfahrens berücksichtigt. Somit werden die Fehlerparameter im Unterschied zum Stand der Technik nun nicht mehr als konstant angenommen und über alle elektrischen Signalperioden ermittelt. Somit können bei Durchführung des Verfahrens Fehler, die über eine mechanische Umdrehung variieren, kompensiert werden, anstatt lediglich einen Mittelwert dieser Fehler zu kompensieren.

Das Verfahren kann für eine Drehfeldmaschine und somit für einen Elektromotor mit einem Rotor als zu beobachtendem Objekt eingesetzt werden, für deren bzw. dessen Regelung die genaue Kenntnis der aktuellen Winkellage des Rotors, der sich um seine Achse dreht, zu jedem Zeitpunkt verwendet wird. Allgemein kann mit einem Sinus-Kosinus-Geber als Sensor der mechanische Winkel $\Theta_m(t)$ eines sich rotierenden Objekts bestimmt werden. Mit dem Sinus-Kosinus-Geber werden Informationen zu dem mechanischen Winkel $\Theta_m(t)$ in Form des Sinus-Signals $u_{sin}(t)$ und des Kosinus-Signals $u_{cos}(t)$, wie voranstehend vorgestellt, bereitgestellt. Der elektrische Winkel $\Theta_e(t)$ kann über den Arkustangens oder Arkustangens 2 aus einem Sinus- und Kosinus-Wert berechnet werden. Ein als Sensor einsetzbarer Sinus-Kösinus-Geber kann üblicherweise als Resolver oder Rotorlagegeber auf Basis von Wirbelstromverlusten ausgebildet sein.

Weiterhin wird zwischen der mechanischen Periode einer mechanischen Umdrehung des Bauteils, die ein mechanisches Zeitintervall $T_m$ andauert und elektrischen Signalperiode der Sensorsignale, d. h. dem Sinus-Signal $u_{sin}(t)$ und dem Kosinus-Signal $u_{cos}(t)$ unterschieden. Konstruktionsbedingt entspricht und/oder umfasst eine Periode einer mechanischen Umdrehung für den mechanischen Winkel $\Theta_m(t)$ von 0° bis 360°des zu messenden Objekts p, z. B. p = 16, elektrischen Signalperioden des Sensorsignals. Die Zahl p wird mechanisch festgelegt und in der Regel der Anzahl an Polpaaren der zu regelnden elektromechanischen Maschine, der bzw. die mit dem sich drehenden Bauteil bzw. Objekt verbunden ist, angeglichen.

Für eine korrekte Berechnung eines Werts des mechanischen Winkels $\Theta_m(t)$ müssen für die eventuell auftretenden Fehlerparameter drei Bedingungen erfüllt sein. Dabei müssen die Amplituden des Sinus- und Kosinus-Signals den gleichen Betrag aufweisen, weshalb $Q_{amp} = 1$ als Bedingung zu erfüllen ist. Außerdem muss als zweite Bedingung ein Offset (Mittelwert) des Sinus-Signals und des Kosinus-Signals gleich null sein, d. h. $\Delta u_{sin} = \Delta u_{cos} = 0$. Weiterhin müssen als dritte Bedingung das Sinus-Signal und das Kosinus-Signal zueinander eine Phasenverschiebung von exakt 90° aufweisen, d. h. $\Delta\varphi = 0$. Demnach ergeben sich Fehlerparameter als Abweichungen der genannten Bedingungen bzw. Forderungen.

Die Fehlerparameter können beispielsweise durch eine Ellipsenapproximation berechnet werden. Zugleich dienen die berechneten sowie gewichteten Fehlerparameter als Kompensationsparameter, mit deren Hilfe unter Durchführung mathematischer Operationen eine Amplitudengleichheit erreicht, Offsetwerte und Orthogonalitätsfehler (Phase ungleich 90° oder Phasenfehler $\Delta\varphi$ ungleich 0°) eliminiert werden können.

Aus den Fehlerparametern oder den daraus abgeleiteten Kompensationsparametern der Signalgleichungen (1) und (2) wird über einen elektrischen Winkel $\Theta_e(t)$ einer elektrischen Signalperiode weiterhin der reale Winkel $\Theta_m(t)$ des Objekts berechnet. Hierbei gilt:

$$y(t) = (u_{sin}(t) - \Delta u_s)/Q_{amp} \quad (3)$$

$$x(t) = (u_{cos}(t) - \Delta u_c + y * \sin(\Delta\varphi))/\cos(\Delta\varphi) \quad (4)$$

$$\Theta_e = \arctan(y/x), \text{ falls } x > 0 \quad (5)$$

$$\Theta_e = \arctan(y/x) + 180°, \text{ falls } x < 0 \quad (6)$$

$$\Theta_e = 90° * \text{sign}(y), \text{ falls } x = 0 \quad (7)$$

Dabei ist y(t) ein fehlerkompensiertes Sinus-Signal $u_{sin}(t)$ und x(t) ein fehlerkompensiertes Kosinus-Signal $u_{cos}(t)$. Aus dem elektrischen Winkel $\Theta_e(t)$ kann der mechanische Winkel $\Theta_m(t)$ berechnet werden. Hierbei ist zu berücksichtigen, in welcher der insgesamt p elektrischen Signalperioden sich der aktuelle elektrische Winkel $\Theta_e(t)$ befindet. Falls sich der elektrische Winkel $\Theta_e(t)$ bspw. in der j-ten elektrischen Signalperiode befindet, entspricht dieser elektrische Winkel $\Theta_e(t)$ dem mechanischen Winkel $\Theta_m(t) = (j - 1) * 360°/p + \Theta_e(t)/p$.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.

Figur 1 zeigt zwei erste Diagramme zu einer Ausführungsform des erfindungsgemäßen Verfahrens.

Figur 2 zeigt ein zweites Diagramm zu der Ausführungsform des erfindungsgemäßen Verfahrens.

Figur 3 zeigt zwei weitere Diagramme zu der Ausführungsform des erfindungsgemäßen Verfahrens.

Figur 4 zeigt in schematischer Darstellung ein Beispiel für ein Lagemesssystem sowie für eine Ausführungsform eines erfindungsgemäßen Systems zur Durchführung der Ausführungsform des erfindungsgemäßen Verfahrens.

Figur 5 zeigt ein Diagramm zum Vergleich einer mechanischen Periode mit elektrischen Signalperioden.

Die beiden Diagramme aus den Figuren 1a und 1b umfassen jeweils eine Abszisse 22, entlang der Werte eines mechanischen Winkels $\Theta_m$ eines Objekts, das sich um eine Achse dreht, in Grad aufgetragen sind. In dem Diagramm aus Figur 1a ist weiterhin entlang einer Ordinate 24 ein Wert eines Verlaufs eines Fehlerparameters $\Delta u_c$ und somit eines Offsets eines Kosinus-Signals $\Delta u_{cos}$ in Volt aufgetragen. Weiterhin ist in dem Diagramm aus Figur 1a durch eine durchgehende Kurve ein tatsächlicher Verlauf 26 dieses Fehlerparameters $\Delta u_c$ über eine mechanische Umdrehung dargestellt.

Im Rahmen der vorgestellten Ausführungsform des Verfahrens wird die mechanische Periode, die ein mechanisches Zeitintervall $T_m$ andauert, zudem in hier p = 16 elektrische Signalperioden 1, 2, 3, 4, 5, 6, 7, 8, 9, 10, 11, 12, 13, 14, 15, 16 aufgeteilt, wobei jede dieser Signalperioden 1, 2, 3, 4, 5, 6, 7, 8, 9, 10, 11, 12, 13, 14, 15, 16 ein elektrisches Zeitintervall $T_e = T_m/p$ andauert. Dabei ist eine Anzahl der elektrischen Signalperioden durch ein Sensorsystem, mit dem das Objekt zu erfassen ist, vorgegeben. Eine Annäherung an den tatsächlichen Verlauf 26 ist in Figur 1 durch eine stufenförmige Kurve 28 dargestellt, die dem tatsächlichen Verlauf 26 folgt und in jeder elektrischen Signalperiode 1, 2, 3, 4, 5, 6, 7, 8, 9, 10, 11, 12, 13, 14, 15, 16 einen konstanten Wert für den Fehlerparameter $\Delta u_c$ aufweist, wobei der für jeweils eine elektrische Signalperiode 1, 2, 3, 4, 5, 6, 7, 8, 9, 10, 11, 12, 13, 14, 15, 16 konstante Wert entlang der Kurve 28 für die elektrische Signalperiode 1, 2, 3, 4, 5, 6, 7, 8, 9, 10, 11, 12, 13, 14, 15, 16 als eine Stufe dargestellt ist.

Dabei wird für jede elektrische Signalperiode ein Mittelwert des Fehlerparameters $\Delta u_c$ über die jeweilige elektrische Signalperiode berechnet und für die jeweilige Signalperiode 1, 2, 3, 4, 5, 6, 7, 8, 9, 10, 11, 12, 13, 14, 15, 16 als hierfür vorgesehenen konstanten Wert verwendet. Somit wird ein Fehlerparameter für jede elektrische Signalperiode 1, 2, 3, 4, 5, 6, 7, 8, 9, 10, 11, 12, 13, 14, 15, 16, wobei sämtliche elektrischen Signalperioden 1, 2, 3, 4, 5, 6, 7, 8, 9, 10, 11, 12, 13, 14, 15, 16 die gesamte mechanische Periode bilden, individuell berechnet. Durch diese Maßnahme wird berücksichtigt, dass Werte des jeweiligen Fehlerparameters aufgrund bestimmter mechanischer Toleranzen, z. B. aufgrund einer Exzentrizität oder eines Taumelns des Objekts von elektrischer Signalperiode 1, 2, 3, 4, 5, 6, 7, 8, 9, 10, 11, 12, 13, 14, 15, 16 zu elektrischer Signalperiode 1, 2, 3, 4, 5, 6, 7, 8, 9, 10, 11, 12, 13, 14, 15, 16 im Verlauf einer mechanischen Umdrehung variieren können und demnach nicht konstant sind, sich jedoch nach allen sechzehn elektrischen Signalperioden 1, 2, 3, 4, 5, 6, 7, 8, 9, 10, 11, 12, 13, 14, 15, 16 wiederholen, da die Markierung des Objekts dann wieder dieselbe Position einnimmt. Eine neue elektrische Signalperiode 1, 2, 3, 4, 5, 6, 7, 8, 9, 10, 11, 12, 13, 14, 15, 16 beginnt immer dann, wenn das Vorzeichen des Werts des Sinus-Signals einen Vorzeichenwechsel von Minus zu Plus vollzieht, wodurch der stufenförmige Verlauf der Fehler- bzw. Kompensationsparameter entsteht.

In dem Diagramm aus Figur 1b ist entlang einer Ordinate 30 ein Restfehler $\Delta u_{c_rest}$ des Kosinus-Signals in Volt dargestellt. Ein Verlauf 32 dieses Restfehlers $\Delta u_{c_rest}$ ist in dem Diagramm aus Figur 1b eingetragen, wobei für jede elektrische Periode 1, 2, 3, 4, 5, 6, 7, 8, 9, 10, 11, 12, 13, 14, 15, 16 mit diesem Verlauf 32 die Abweichung der Kurve 28 für die Annäherung von dem tatsächlichen Verlauf 26 dargestellt ist, wobei der Verlauf 32 einer Differenz der stufenförmigen Kurve 28 und dem Verlauf 26 entspricht.

Das Diagramm aus Figur 2 umfasst eine Abszisse 34, entlang der ein elektrischer Winkel $\Theta_e(t)$ einer i-ten elektrischen Signalperiode in Grad aufgetragen ist.

Entlang einer Ordinate 36 des Diagramms aus Figur 2 ist ein Gewichtungsanteil einer Parametergewichtung aufgetragen. Dabei zeigt das Diagramm einen ersten Verlauf 38 für einen Gewichtungsanteil $G_{i-1}(\Theta_e)$ einer i-1-ten elektrischen Signalperiode, ein zweiter Verlauf 40 für einen Gewichtungsanteil $Gi(\Theta_e)$ einer i-ten elektrischen Signalperiode sowie ein dritter Verlauf 42 für einen Gewichtungsanteil $G_{i+1}(\Theta_e)$ einer i+1-ten elektrischen Signalperiode dargestellt.

Das Diagramm aus Figur 3a umfasst ebenfalls eine Abszisse 22, entlang der ein Winkel $\Theta_m$ der mechanischen Drehung des Objekts aufgetragen ist, sowie eine Ordinate 24 für Werte eines Fehlerparameters $\Delta u_c$ eines Kosinus-Signals $u_{cos}$ in Volt. Dabei ist dieses Diagramm ebenfalls in p = 16 elektrische Signalperioden 1, 2, 3, 4, 5, 6, 7, 8, 9, 10, 11, 12, 13, 14, 15, 16 aufgeteilt. In dem Diagramm ist ferner der tatsächliche Verlauf 26 des Fehlerparameters $\Delta u_c$, wie aus dem Diagramm aus Figur 1a bekannt, dargestellt. Außerdem zeigt das Diagramm aus Figur 3a einen weiteren Verlauf 44, mit dem eine Gewichtung des Fehlerparameters $\Delta u_c$ jeweils einer i-ten elektrischen Signalperiode mit einer benachbarten b-ten, d. h. i-1-ten oder i+1-ten elektrischen Signalperioden berücksichtigt wird. Eine stufenförmige Kurve 46 folgt hier dem Verlauf 44 und weist hier einen konstanten Wert, bspw. Mittelwert des Fehlerparameters $\Delta u_c$ während der jeweiligen elektrischen Signalperiode 1, 2, 3, 4, 5, 6, 7, 8, 9, 10, 11, 12, 13, 14, 15, 16 auf.

Auch durch fehlerbehaftete Signale kann zudem näherungsweise bestimmt werden, an welchem elektrischen Winkel $\Theta_e$ sich die Markierung des Objekts in einer aktuellen elektrischen Signalperiode 1, 2, 3, 4, 5, 6, 7, 8, 9, 10, 11, 12, 13, 14, 15, 16 befindet. Mit Hilfe dessen wird eine Interpolation (Gewichtung) mit den Fehlerparametern der vergangenen i-1-ten oder der nachfolgenden i+1-ten elektrischen Signalperiode 1, 2, 3, 4, 5, 6, 7, 8, 9, 10, 11, 12, 13, 14, 15, 16 durchgeführt.

So beträgt hier bspw. ein Wert des elektrischen Winkels $\Theta_e$ in der zehnten elektrischen Signalperiode 10 ca. 90°. Ein gewichteter Kompensationsparameter für einen Messpunkt wird laut dem Diagramm aus Figur 2 mit 0,25 * Kompensationsparameter_der_neunten_Signalperiode + 0,75 * Kompensationparameter_der_zehnten_Signalperiode berechnet. Ein derart gewichteter Kompensationsparameter wird dann für die Kompensation verwendet. Dies gilt für alle Fehlerparameter bzw. Kompensationsparameter $Q_{amp}$, $\Delta\varphi$, $\Delta u_c$ und $\Delta u_s$.

Das Diagramm aus Figur 3b umfasst wie das Diagramm aus Figur 1b eine Abszisse 22 und eine Ordinate 30, entlang der ein Restfehler des Kompensationsparameters aufgetragen ist. Ein Verlauf 48 dieses Restfehlers ist in dem Diagramm aus Figur 3b eingetragen und entspricht einer Differenz aus der stufenförmigen Kurve 46 und dem gewichteten Verlauf 44 des Fehlerparameters $\Delta u_c$.

Bei der anhand der Diagramme aus den Figuren 1 bis 3 vorgestellten Ausführungsformen des erfindungsgemäßen Verfahrens wird berücksichtigt, dass sich ein modulierter Fehlerparameter des Signals innerhalb einer elektrischen Signalperiode 1 bis p, hier bspw. einer elektrischen Signalperiode 1, 2, 3, 4, 5, 6, 7, 8, 9, 10, 11, 12, 13, 14, 15, 16 nur geringfügig ändert. Außerdem wird berücksichtigt, dass sich der Verlauf der Fehlerparameter nach einer mechanischen Drehung, die hier p = 16 elektrische Signalperioden umfasst, wiederholt. Bei Durchführung der Ausführungsform des Verfahrens werden die Fehlerparameter für jede elektrische Signalperiode 1, 2, 3, 4, 5, 6, 7, 8, 9, 10, 11, 12, 13, 14, 15, 16, wie durch die Diagramme aus Figur 1 dargestellt, berechnet. Hierzu wird innerhalb einer elektrischen Signalperiode 1, 2, 3, 4, 5, 6, 7, 8, 9, 10, 11, 12, 13, 14, 15, 16 eine ausreichend hohe Anzahl an Messpunkten des eventuell fehlerhaften Lagesignals, hier des Kosinus-Signals berücksichtigt. Hierbei hängt eine benötigte Anzahl von Messpunkten von einer gewählten Methode zur Bestimmung der Fehlerparameter ab.

In Ausgestaltung kann für jede elektrische Signalperiode 1, 2, 3, 4, 5, 6, 7, 8, 9, 10, 11, 12, 13, 14, 15, 16 methodenabhängig jeweils ein Satz an Kompensationsparametern bestimmt werden, wobei für jeden Kompensationsparameter innerhalb der jeweils vorgesehenen elektrischen Signalperiode jeweils ein Mittelwert des jeweiligen Fehlerparameters eingestellt wird (Figur 1).

Anschließend wird bei einer Kompensation der modulierten Fehlerparameter eine Interpolation von Kompensationsparametern benachbarter elektrischer Signalperioden durchgeführt, wodurch eine Genauigkeit der Fehlerparameter innerhalb der einzelnen elektrischen Signalperioden 1, 2, 3, 4, 5, 6, 7, 8, 9, 10, 11, 12, 13, 14, 15, 16 erhöht werden kann. Hierzu wird eine Gewichtung der Kompensationsparameter und/oder Fehlerparameter je nach Position des elektrischen Winkels $\Theta_e$ innerhalb der momentanen elektrischen Signalperiode 1, 2, 3, 4, 5, 6, 7, 8, 9, 10, 11, 12, 13, 14, 15, 16, wie durch das Diagramm in Figur 2 angedeutet, durchgeführt. Dabei beginnt die Gewichtung jeweils bei einer ersten elektrischen Signalperiode i = 1 und endet bei einer maximalen elektrischen Signalperiode i = p, in die die mechanische Umdrehung bzw. Periode aufgeteilt ist. Außerdem wird die erste Hälfte der elektrischen Signalperiode 1 einer aktuellen mechanischen Periode mit der zweiten Hälfte der letzen, p-ten elektrischen Signalperiode 16 der vorhergehenden mechanischen Periode interpoliert und/oder gewichtet. Entsprechend wird die zweite Hälfte der letzten elektrischen Signalperiode 16 der aktuellen mechanischen Periode mit der ersten Hälfte der ersten elektrischen Signalperiode der nachfolgenden mechanischen Periode interpoliert und/oder gewichtet.

In der beschriebenen Ausführungsform des Verfahrens ist p = 16. Demnach beträgt bei einer elektrischen Winkelposition von 0° ein für die Gewichtung vorgesehener Gewichtungsanteil einer vorhergehenden i-1-ten elektrischen Signalperiode und einer aktuellen i-ten elektrischen Signalperiode jeweils 50 %. Dabei steigt der Gewichtungsanteil der aktuellen, i-ten elektrischen Signalperiode ausgehend von 50 % bei 0° bis auf 100 % bei 180° linear an. Anschließend sinkt der Anteil der i-ten elektrischen Signalperiode von 100 % bei 180° wieder linear auf 50 % bei 360°, wohingegen der Anteil der nachfolgenden i+1-ten elektrischen Signalperiode von 0 % bei 180° auf 50 % bei 360° ansteigt. Bei der vorgestellten Ausführungsform wird eine erste elektrische Signalperiode 1 einer aktuellen mechanischen Periode mit der letzten, hier p-ten bzw. sechzehnten elektrischen Signalperiode der vorhergehenden mechanischen Periode gewichtet. Außerdem wird die letzte, hier p-te bzw. sechzehnte elektrische Signalperiode 16 der aktuellen mechanischen Periode mit der ersten elektrischen Signalperiode der nachfolgenden mechanischen Periode gewichtet.

Wie die Diagramme aus den Figuren 3a und 3b zeigen, kann mit den Kompensationsparametern der Verlauf der modulierten Fehlerparameter nachgebildet werden, wobei eine Genauigkeit der berechneten mechanischen Winkelposition erhöht wird. Eine Standardabweichung des Restfehlers, wie durch die Kurve 48 aus Figur 3b im Vergleich zu der Kurve 32 aus Figur 1b dargestellt, wird im Vergleich zur periodenindividuellen Kompensation ohne Gewichtung der Kompensationsparameter von benachbarten elektrischen Signalperioden hier um den Faktor 5,5 reduziert. Somit kann das Objekt auch größere Fertigungstoleranzen aufweisen, wenn die beschriebene Ausführungsform des Verfahrens durchgeführt wird, so dass wiederum Produktionskosten für ein Lagesystem, das das Objekt umfassen kann, gesenkt werden können.

Bei der Ausführungsform des erfindungsgemäßen Verfahrens wird für jede elektrische Signalperiode aus zwischengespeicherten Messpunkten mit einer der bekannten Methoden ein Satz an Fehlerparametern bestimmt und mit diesem Satz für jede elektrische Signalperiode 1, 2, 3, 4, 5, 6, 7, 8, 9, 10, 11, 12, 13, 14, 15, 16 individuell ein gleitender Mittelwert der Fehlerparameter über die vergangenen mechanischen Umdrehungen gebildet. Bei einem nachfolgenden Durchlauf von identischen elektrischen Signalperioden 1 bis p kann auf den aktualisierten Satz an Fehlerparametern zurückgegriffen werden.

Dabei werden einzelne elektrische Signalperioden anhand eines Vorzeichenwechsels des Sinus-Signals von Minus nach Plus und somit von negativen Werten zu positiven Werten für das Sinus-Signal erkannt. Üblicherweise können starke Offset-Werte eine Detektion einer Grenze zwischen zwei elektrischen Signalperioden 1, 2, 3, 4, 5, 6, 7, 8, 9, 10, 11, 12, 13, 14, 15, 16 erschweren. Dieser Effekt wird jedoch dadurch minimiert, indem eine Betrachtung der Vorzeichen an bereits vorab kompensierten Messwerten und nicht an einem Rohsignal durchgeführt wird. Dabei kann eine Vorab-Kompensation der Messwerte mit den ungewichteten Fehlerparametern der aktuellen i-ten elektrischen Signalperiode durchgeführt werden. Außerdem kann eine Position des elektrischen Winkels $\Theta_e$ für eine Berechnung eines Gewichtungsanteils durch fehlerbehaftete Sensorsignale näherungsweise berechnet werden. Hierbei können ebenfalls vorab kompensierte Signale verwendet werden, um eine Genauigkeit für eine Angabe der Position des elektrischen Winkels $\Theta_e$ innerhalb der jeweiligen elektrischen Signalperiode für die vorzunehmende Gewichtung zu erhöhen. Danach wird eine eigentliche Kompensation mit einer Gewichtung der Fehlerparameter der benachbarten elektrischen Signalperioden durchgeführt.

Das in Figur 4 schematisch dargestellte Beispiel für das Lagemesssystem 60 umfasst als Objekt eine Drehscheibe 62, die an einem nicht weiter dargestellten Rotor befestigt ist und sich bei einem Betrieb des Lagemesssystems 60 um eine Achse dreht. Die Drehscheibe 62 weist an ihrer Oberfläche eine Markierung 64 auf. Die hier schematisch dargestellte Ausführungsform des Systems 66 umfasst einen Sensor 68 sowie eine mit dem Sensor 68 verbundene Recheneinheit 70.

Eine zeitabhängige Position der Markierung 64 bei einer Drehung der Drehscheibe 62 ist von dem Sensor 68 zu erfassen. Von dem Sensor 68 bereitgestellte Signale mit Informationen zu der Position werden an die Recheneinheit 70 übermittelt und unter Durchführung der beschriebenen Ausführungsform des Verfahrens ausgewertet.

Das in Figur 5 dargestellte Diagramm umfasst eine Abszisse 80, entlang der die Zeit t aufgetragen ist. Entlang einer Ordinate 82 des Diagramms aus Figur 5 ist ein Wert eines Winkels $\Theta$ aufgetragen. Weiterhin umfasst das Diagramm eine erste Kurve 84, die hier durch eine durchgezogene Linie dargestellt ist und einen zeitabhängigen Verlauf eines mechanischen Winkels $\Theta_m(t)$ darstellt. Eine zweite Kurve 86 ist hier gepunktet und stellt einen Verlauf elektrischer Winkel $\Theta_e(t)$ mehrerer elektrischer Signalperioden dar. Entlang der Abszisse 80 ist ein mechanisches Zeitintervall $T_m$ einer

mechanischen Periode angedeutet. Während dieser mechanischen Periode dreht sich ein Objekt während einer Bewegung einmal um 360° und durchläuft einen mechanischen Winkel von 0° bis 360°, wie durch die erste Kurve 84 angedeutet. Während dieses mechanischen Zeitintervalls $T_m$ werden zugleich p elektrische Signalperioden durchlaufen, wobei eine Länge eines Zeitintervalls $T_{e1}$, $T_{e2}$, $T_{e3}$, $T_{e4}$ einer jeweiligen elektrischen Signalperiode $T_m/p$ entspricht, wobei im vorliegenden Fall p = 4 ist.

Während jeweils einer dieser p elektrischen Signalperioden durchläuft ein elektrischer Winkel $\Theta_e$ jeweils Werte von 0° bis 360°. Insgesamt umfasst die mechanische Periode insgesamt p elektrische Signalperioden. Hierbei ist ein Übergang zwischen zwei benachbarten elektrischen Signalperioden durch einen Vorzeichenwechsel eines Sinus-Signals $u_{sin}(t)$ zu erkennen, wobei ein Wert dieses Sinus-Signals $u_{sin}(t)$ bei dem Übergang zwischen den beiden benachbarten elektrischen Signalperioden ausgehend von negativen Werten positive Werte annimmt.

## Patentansprüche

1. Verfahren zum Ermitteln einer Bewegung eines Objekts, das sich um eine Achse dreht und dabei einen mechanischen Winkel $\Theta_m$ einnimmt, wobei mindestens eine Signalgleichung verwendet wird, die die drehende Bewegung beschreibt, wobei für die mindestens eine Signalgleichung mindestens ein Fehlerparameter definiert wird, wobei eine mechanische Periode der drehenden Bewegung in mehrere elektrische Signalperioden (1, 2, 3, 4, 5, 6, 7, 8, 9, 10, 11, 12, 13, 14, 15, 16) aufgeteilt wird, so dass der mechanische Winkel $\Theta_m$ einer dieser Signalperioden zusammen mit einem elektrischen Winkel $\Theta_e$ entspricht, wobei für jede elektrische Signalperiode (1, 2, 3, 4, 5, 6, 7, 8, 9, 10, 11, 12, 13, 14, 15, 16) der mechanischen Periode mindestens ein Wert für den mindestens einen Fehlerparameter individuell bestimmt wird, wobei für jede elektrische Signalperiode (1, 2, 3, 4, 5, 6, 7, 8, 9, 10, 11, 12, 13, 14, 15, 16) aus dem mindestens einen Wert für den mindestens einen Fehlerparameter ein Mittelwert als Kompensationsparameter gebildet wird,
   **dadurch gekennzeichnet,**
   **dass** ein Kompensationsparameter einer i-ten elektrischen Signalperiode (1, 2, 3, 4, 5, 6, 7, 8, 9, 10, 11, 12, 13, 14, 15, 16) mit einem Kompensationsparameter einer b-ten benachbarten elektrischen Signalperiode (1, 2, 3, 4, 5, 6, 7, 8, 9, 10, 11, 12, 13, 14, 15, 16) interpoliert wird, wobei für jeden Kompensationsparameter der i-ten elektrischen Signalperiode (1, 2, 3, 4, 5, 6, 7, 8, 9, 10, 11, 12, 13, 14, 15, 16) ein Gewichtungsanteil $Gi(\Theta_e)$ verwendet wird, der von dem elektrischen Winkel $\Theta_e$ innerhalb der i-ten elektrischen Signalperiode (1, 2, 3, 4, 5, 6, 7, 8, 9, 10, 11, 12, 13, 14, 15, 16) abhängig ist.

2. Verfahren nach Anspruch 1, bei dem aus dem mindestens einen Wert für den mindestens einen Fehlerparameter ein gleitender Mittelwert als Kompensationsparameter über mindestens eine vergangene mechanische Periode gebildet wird.

3. Verfahren nach Anspruch 1 oder 2, bei dem als erste Signalgleichung eine Gleichung für ein Sinus-Signal $u_{sin}(t) = Q_{amp} * u_0 * \sin(\Theta_m) + \Delta u_s$ und als zweite Signalgleichung eine Gleichung für ein Kosinus-Signal $u_{cos}(t) = u_0 * \cos(\Theta_m + \Delta\varphi) + \Delta u_c$ verwendet wird, wobei als Fehlerparameter eine Abweichung $Q_{amp}$ der Amplituden, ein jeweiliger Offset $\Delta u_s$ und $\Delta u_c$ sowie eine Phasenverschiebung $\Delta\varphi$ verwendet werden.

4. Verfahren nach einem der voranstehenden Ansprüche, bei dem der Kompensationsparameter der i-ten elektrischen Signalperiode (1, 2, 3, 4, 5, 6, 7, 8, 9, 10, 11, 12, 13, 14, 15, 16) für einen Bereich des elektrischen Winkels $\Theta_e$ größer als 0° und kleiner gleich 180° mit dem Kompensationsparameter der vorhergehenden i-1-ten elektrischen Signalperiode (1, 2, 3, 4, 5, 6, 7, 8, 9, 10, 11, 12, 13, 14, 15, 16) und für einen Bereich des elektrischen Winkels $\Theta_e$ größer als 180° und kleiner gleich 360° mit dem Kompensationsparameter der nachfolgenden i+1-ten elektrischen Signalperiode (1, 2, 3, 4, 5, 6, 7, 8, 9, 10, 11, 12, 13, 14, 15, 16) interpoliert wird.

5. Verfahren nach Anspruch 4, bei dem in einem jeweiligen Bereich des elektrischen Winkels $\Theta_e$ für eine Summe aus dem Gewichtungsanteil $Gi(\Theta_e)$ der i-ten elektrischen Signalperiode (1, 2, 3, 4, 5, 6, 7, 8, 9, 10, 11, 12, 13, 14, 15, 16) und dem Gewichtungsanteil $G_b(\Theta_e)$ der benachbarten elektrischen Signalperiode (1, 2, 3, 4, 5, 6, 7, 8, 9, 10, 11, 12, 13, 14, 15, 16) $Gi(\Theta_e) + G_b(\Theta_e) = 1$ gilt.

6. Verfahren nach Anspruch 4 oder 5, bei dem in dem Bereich des elektrischen Winkels $\Theta_e$ größer als 0° und kleiner gleich 180° für den Gewichtungsanteil $Gi(\Theta_e)$ der i-ten elektrischen Signalperiode: $Gi(\Theta_e) = 0{,}5 + \Theta/360°$ und für den Gewichtungsanteil der vorhergehenden i-1-ten elektrischen Signalperiode (1, 2, 3, 4, 5, 6, 7, 8, 9, 10, 11, 12, 13, 14, 15, 16): $G_{i-1}(\Theta_e) = 0{,}5 - \Theta/360°$ gilt, und bei dem in dem Bereich des elektrischen Winkels $\Theta_e$ größer als 180° und kleiner gleich 360° für den Gewichtungsanteil $Gi(\Theta_e)$ der i-ten elektrischen Signalperiode (1, 2, 3, 4, 5, 6, 7, 8, 9, 10, 11, 12, 13, 14, 15, 16): $Gi(\Theta_e) = 1{,}5 - \Theta/360°$ und für den Gewichtungsanteil der nachfolgenden i+1-ten elektrischen Signalperiode (1, 2, 3, 4, 5, 6, 7, 8, 9, 10, 11, 12, 13, 14, 15, 16): $G_{i+1}(\Theta_e) = -0{,}5 + \Theta/360°$ gilt.

7. Verfahren nach einem der voranstehenden Ansprüche, bei dem einzelne elektrische Signalperioden (1, 2, 3, 4, 5, 6, 7, 8, 9, 10, 11, 12, 13, 14, 15, 16) anhand eines Vorzeichenwechsels des Sinus-Signals $u_{sin}(t)$ erkannt werden.

8. Verfahren nach einem der voranstehenden Ansprüche, bei dem der mindestens eine Fehlerparameter über eine Ellipsenapproximation bestimmt wird.

9. System, das eine Recheneinheit (70) aufweist und zum Ermitteln einer Bewegung eines Objekts, das sich um eine Achse dreht und dabei einen mechanischen Winkel $\Theta_m$ einnimmt, ausgebildet ist, wobei die Recheneinheit (70) dazu ausgebildet ist, mindestens eine Signalgleichung zu verwenden, die die drehende Bewegung beschreibt, für die mindestens eine Signalgleichung mindestens einen Fehlerparameter zu definieren, eine mechanische Periode der drehenden Bewegung in mehrere elektrische Signalperioden (1, 2, 3, 4, 5, 6, 7, 8, 9, 10, 11, 12, 13, 14, 15, 16) aufzuteilen, so dass der mechanische Winkel $\Theta_m$ einer dieser Signalperioden zusammen mit einem elektrischen Winkel $\Theta_e$ entspricht, für jede elektrische Signalperiode (1, 2, 3, 4, 5, 6, 7, 8, 9, 10, 11, 12, 13, 14, 15, 16) der mechanischen Periode mindestens einen Wert für den mindestens einen Fehlerparameter individuell zu bestimmen und für jede elektrische Signalperiode (1, 2, 3, 4, 5, 6, 7, 8, 9, 10, 11, 12, 13, 14, 15, 16) aus dem mindestens einen Wert für den mindestens einen Fehlerparameter einen Mittelwert als Kompensationsparameter zu bilden,
**dadurch gekennzeichnet,**
**dass** ein Kompensationsparameter einer i-ten elektrischen Signalperiode (1, 2, 3, 4, 5, 6, 7, 8, 9, 10, 11, 12, 13, 14, 15, 16) mit einem Kompensationsparameter einer b-ten benachbarten elektrischen Signalperiode (1, 2, 3, 4, 5, 6, 7, 8, 9, 10, 11, 12, 13, 14, 15, 16) interpoliert wird, wobei für jeden Kompensationsparameter der i-ten elektrischen Signalperiode (1, 2, 3, 4, 5, 6, 7, 8, 9, 10, 11, 12, 13, 14, 15, 16) ein Gewichtungsanteil $Gi(\Theta_e)$ verwendet wird, der von dem elektrischen Winkel $\Theta_e$ innerhalb der i-ten elektrischen Signalperiode (1, 2, 3, 4, 5, 6, 7, 8, 9, 10, 11, 12, 13, 14, 15, 16) abhängigist.

10. System nach Anspruch 9, das einen Sensor (64) zum Erfassen der Bewegung aufweist.

11. System nach Anspruch 9 oder 10, bei dem die Recheneinheit (70) dazu ausgebildet ist, mindestens einen Schritt eines Verfahrens nach einem der Ansprüche 1 bis 8 durchzuführen.

## Claims

1. Method for ascertaining a movement of an object, which rotates around an axis and thereby assumes a mechanical angle $\Theta_m$, wherein at least one signal equation is used, which describes the rotating movement, wherein at least one error parameter is defined for the at least one signal equation, wherein a mechanical period of the rotating movement is divided into a number of electrical signal periods (1, 2, 3, 4, 5, 6, 7, 8, 9, 10, 11, 12, 13, 14, 15, 16), such that the mechanical angle $\Theta_m$ corresponds to one of these signal periods, together with an electrical angle $\Theta_e$, wherein for each electrical signal period (1, 2, 3, 4, 5, 6, 7, 8, 9, 10, 11, 12, 13, 14, 15, 16) of the mechanical period at least one value is individually determined for the at least one error parameter, wherein for each electrical signal period (1, 2, 3, 4, 5, 6, 7, 8, 9, 10, 11, 12, 13, 14, 15, 16) a mean value is established as a compensation parameter from the at least one value for the at least one error parameter,
**characterised in that**,
a compensation parameter for an i-th electrical signal period (1, 2, 3, 4, 5, 6, 7, 8, 9, 10, 11, 12, 13, 14, 15, 16) is interpolated with a compensation parameter of an adjacent b-th electrical signal period (1, 2, 3, 4, 5, 6, 7, 8, 9, 10, 11, 12, 13, 14, 15, 16), wherein a weighting factor $G_i(\Theta_e)$ is used for each compensation parameter for the i-th electrical signal period (1, 2, 3, 4, 5, 6, 7, 8, 9, 10, 11, 12, 13, 14, 15, 16), which is dependent on the electrical angle $\Theta_e$ within the i-th electrical signal period (1, 2, 3, 4, 5, 6, 7, 8, 9, 10, 11, 12, 13, 14, 15, 16).

2. Method according to claim 1, wherein a moving mean value is established as a compensation parameter from the at least one value for the at least one error parameter over at least one past mechanical period.

3. Method according to claim 1 or 2, wherein an equation for a sine signal $U_{sin}(t) = Q_{amp} * U_0 * \sin(\theta_m) + \Delta U_s$ is used as first signal equation and an equation for a cosine signal $u_{cos}(t) = U_0 * \cos(\Theta_m + \Delta\varphi) + \Delta U_C$ is used as a second signal equation, wherein a deviation $Q_{amp}$ in the amplitudes, an actual Offset $\Delta U_S$ and $\Delta U_C$, as well as a phase shift $\Delta\varphi$, are used as error parameters.

4. Method according to any one of the preceding claims, wherein the compensation parameter for the i-th electrical signal period (1, 2, 3, 4, 5, 6, 7, 8, 9, 10, 11, 12, 13, 14, 15, 16) for a range of the electrical angle $\theta_e$ greater than 0° and less than or equal to 180° is interpolated with the compensation parameter for the previous i-1-th electrical signal period (1, 2, 3, 4, 5, 6, 7, 8, 9, 10, 11, 12, 13, 14, 15, 16) and for a range of the electrical angle $\theta_e$ greater than 180° and less than or equal to 360° is interpolated with the compensation parameter for the subsequent i+1-th electrical signal period (1, 2, 3, 4, 5, 6, 7, 8, 9, 10, 11, 12, 13, 14, 15, 16).

5. Method according to claim 4, wherein, in a particular range of the electrical angle $\theta_e$, for a sum of the weighting factor $G_i(\theta_e)$ for the i-th electrical signal period (1, 2, 3, 4, 5, 6, 7, 8, 9, 10, 11, 12, 13, 14, 15, 16) and the weighting factor $G_b(\theta_e)$ for the adjacent electrical signal period (1, 2, 3, 4, 5, 6, 7, 8, 9, 10, 11, 12, 13, 14, 15, 16), $G_i(\theta_e) + G_b(\theta_e) = 1$ applies.

6. Method according to claim 4 or 5, wherein in the range of the electrical angle $\theta_e$ greater than 0° and less than or equal to 180° for the weighting factor $G_i(\theta_e)$ for the i-th electrical signal period: $G_i(\theta_e) = 0.5 + \theta/360°$ and for the weighting factor for the previous i-1-th electrical signal period (1, 2, 3, 4, 5, 6, 7, 8, 9, 10, 11, 12, 13, 14, 15, 16): $G_{i-1}(\theta_e) = 0.5 - \theta/360°$ applies, and wherein in the range of the electrical angle $\theta_e$ greater than 180° and less than or equal to 360° for the weighting factor $G_i(\theta_e)$ for the i-th electrical signal period (1, 2, 3, 4, 5, 6, 7, 8, 9, 10, 11, 12, 13, 14, 15, 16): $G_i(\theta_e) = 1.5 - \theta/360°$ and for the weighting factor for the subsequent i+1-th electrical signal period (1, 2, 3, 4, 5, 6, 7, 8, 9, 10, 11, 12, 13, 14, 15, 16): $G_{i+1}(\theta_e) = -0.5 + \theta/360°$ applies.

7. Method according to any one of the preceding claims, wherein the individual electrical signal periods (1, 2, 3, 4, 5, 6, 7, 8, 9, 10, 11, 12, 13, 14, 15, 16) are detected based on a sign change in the sine signal $U_{sin}(t)$.

8. Method according to any of the preceding claims, wherein the at least one error parameter is determined via an ellipse approximation.

9. System, which includes a computing unit (70) and is designed to ascertain a movement of an object, which rotates around an axis and thereby assumes a mechanical angle $\theta_m$, wherein the computing unit (70) is designed to use at least one signal equation, which describes the rotating movement, to define at least one error parameter for the at least one signal equation, to divide a mechanical period of the rotating movement into a number of electrical signal periods (1, 2, 3, 4, 5, 6, 7, 8, 9, 10, 11, 12, 13, 14, 15, 16), such that the mechanical angle $\theta_m$ corresponds to one of these signal periods, together with an electrical angle $\theta_e$, to individually determine at least one value for the at least one error parameter for each electrical signal period (1, 2, 3, 4, 5, 6, 7, 8, 9, 10, 11, 12, 13, 14, 15, 16) of the mechanical period and to establish a mean value as a compensation parameter from the at least one value for the at least one error parameter for each electrical signal period (1, 2, 3, 4, 5, 6, 7, 8, 9, 10, 11, 12, 13, 14, 15, 16), **characterised in that**,
a compensation parameter for an i-th electrical signal period (1, 2, 3, 4, 5, 6, 7, 8, 9, 10, 11, 12, 13, 14, 15, 16) is interpolated with a compensation parameter of a b-th adjacent electrical signal period (1, 2, 3, 4, 5, 6, 7, 8, 9, 10, 11, 12, 13, 14, 15, 16), wherein a weighting factor $G_i(\theta_e)$ is used for each compensation parameter for the i-th electrical signal period (1, 2, 3, 4, 5, 6, 7, 8, 9, 10, 11, 12, 13, 14, 15, 16), which is dependent on the electrical angle $\theta_e$ within the i-th electrical signal period (1, 2, 3, 4, 5, 6, 7, 8, 9, 10, 11, 12, 13, 14, 15, 16).

10. System according to claim 9, which includes a sensor (64) for detecting movement.

11. System according to claim 9 or 10, wherein the computing unit (70) is designed to perform at least one step of a method according to any one of the claims 1 to 8.

## Revendications

1. Procédé permettant de déterminer un mouvement d'un objet qui tourne autour d'un axe et occupe un angle mécanique $\theta_m$, dans lequel au moins une équation de signal est utilisée, laquelle décrit le mouvement rotatif, dans lequel pour l'au moins une équation de signal au moins un paramètre d'erreur est défini, dans lequel une période mécanique du mouvement rotatif est divisée en plusieurs périodes de signal électriques (1, 2, 3, 4, 5, 6, 7, 8, 9, 10, 11, 12, 13, 14, 15, 16) de sorte que l'angle mécanique $\theta_m$ corresponde à une des ces périodes de signal conjointement avec un angle électrique $\theta_e$, dans lequel pour chaque période de signal électrique (1, 2, 3, 4, 5, 6, 7, 8, 9, 10, 11, 12, 13, 14, 15, 16) de la période mécanique au moins une valeur pour l'au moins un paramètre d'erreur est déterminée individuellement, dans lequel pour chaque période de signal électrique (1, 2, 3, 4, 5, 6, 7, 8, 9, 10, 11, 12, 13, 14, 15, 16) une moyenne est formée comme paramètre de compensation à partir de l'au moins une valeur pour l'au moins un paramètre d'erreur,
**caractérisé en ce**
**qu'**un paramètre de compensation d'une i-ème période de signal électrique (1, 2, 3, 4, 5, 6, 7, 8, 9, 10, 11, 12, 13, 14, 15, 16) est interpolé avec un paramètre de compensation d'une b-ème période de signal électrique contiguë (1, 2, 3, 4, 5, 6, 7, 8, 9, 10, 11, 12, 13, 14, 15, 16), dans lequel pour chaque paramètre de compensation de la i-ème période de signal électrique (1, 2, 3, 4, 5, 6, 7, 8, 9, 10, 11, 12, 13, 14, 15, 16) un coefficient de pondération $G_i(\theta_e)$ est utilisé, lequel est dépendant de l'angle électrique $\theta_e$ dans la i-ème période de signal électrique (1, 2, 3, 4, 5, 6, 7, 8, 9, 10, 11, 12, 13, 14, 15, 16).

**2.** Procédé selon la revendication 1, dans lequel une moyenne glissante est formée comme paramètre de compensation sur au moins une période mécanique passée à partir de l'au moins une valeur pour l'au moins un paramètre d'erreur.

**3.** Procédé selon la revendication 1 ou 2, dans lequel comme première équation de signal une équation est utilisée pour un signal de sinus $u_{sin}(t) = Q_{am} * u_0 * \sin(\theta_m) + \Delta u_s$ et comme seconde équation de signal une équation est utilisée pour un signal de cosinus $u_{cos}(t) = u_0 * \cos(\theta_m + \Delta\varphi) + \Delta u_c$, dans lequel comme paramètre d'erreur un écart $Q_{amp}$ des amplitudes, un déport respectif $\Delta u_s$ et $\Delta u_c$ ainsi qu'un décalage de phase $\Delta\varphi$ sont utilisés.

**4.** Procédé selon l'une quelconque des revendications précédentes, dans lequel le paramètre de compensation de la i-ème période de signal électrique (1, 2, 3, 4, 5, 6, 7, 8, 9, 10, 11, 12, 13, 14, 15, 16) pour une zone de l'angle électrique $\theta_e$ supérieur à 0° et inférieur ou égal à 180° est interpolé avec le paramètre de compensation de la i-1-ème période de signal électrique précédente (1, 2, 3, 4, 5, 6, 7, 8, 9, 10, 11, 12, 13, 14, 15, 16) et pour une zone de l'angle électrique $\theta_e$ supérieure à 180° et inférieure ou égale à 360° est interpolé avec le paramètre de compensation de la i+1-ème période de signal électrique suivante (1, 2, 3, 4, 5, 6, 7, 8, 9, 10, 11, 12, 13, 14, 15, 16).

**5.** Procédé selon la revendication 4, dans lequel il s'applique dans une zone respective de l'angle électrique $\theta_e$ pour une somme du coefficient de pondération $G_i(\theta_e)$ de la i-ème période de signal électrique (1, 2, 3, 4, 5, 6, 7, 8, 9, 10, 11, 12, 13, 14, 15, 16) et du coefficient de pondération $G_b(\theta_e)$ de la période de signal électrique contiguë (1, 2, 3, 4, 5, 6, 7, 8, 9, 10, 11, 12, 13, 14, 15, 16) $G_i(\theta_e) + G_b(\theta_e) = 1$.

**6.** Procédé selon la revendication 4 ou 5, dans lequel il s'applique dans la zone de l'angle électrique $\theta_e$ supérieur à 0° et inférieur ou égal à 180° pour le coefficient de pondération $G_i(\theta_e)$ de la i-ème période de signal électrique : $G_i(\theta_e) = 0{,}5 + \theta/360°$ et pour le coefficient de pondération de la i-1-ème période de signal électrique précédente (1, 2, 3, 4, 5, 6, 7, 8, 9, 10, 11, 12, 13, 14, 15, 16) : $G_{i-1}(\theta_e) = 0{,}5 - \theta/360°$, et dans lequel il s'applique dans la zone de l'angle électrique $\theta_e$ supérieur à 180° et inférieur ou égal à 360° pour le coefficient de pondération $G_i(\theta_e)$ de la i-ème période de signal électrique (1, 2, 3, 4, 5, 6, 7, 8, 9, 10, 11, 12, 13, 14, 15, 16) : $G_i(\theta_e) = 1{,}5 - \theta/360°$ et pour le coefficient de pondération de la i+1-ème période de signal électrique précédente (1, 2, 3, 4, 5, 6, 7, 8, 9, 10, 11, 12, 13, 14, 15, 16) : $G_{i+1}(\theta_e) = -0{,}5 + \theta/360°$.

**7.** Procédé selon l'une quelconque des revendications précédentes, dans lequel des périodes de signal électriques individuelles (1, 2, 3, 4, 5, 6, 7, 8, 9, 10, 11, 12, 13, 14, 15, 16) sont détectées au moyen d'un changement de signe du signal de sinus $u_{sin}(t)$.

**8.** Procédé selon l'une quelconque des revendications précédentes, dans lequel l'au moins un paramètre d'erreur est déterminé par une approximation d'ellipse.

**9.** Système qui présente une unité de calcul (70) et est réalisé pour la détermination d'un mouvement d'un objet qui tourne autour d'un axe et occupe un angle mécanique $\theta_m$, dans lequel l'unité de calcul (70) est réalisée afin d'utiliser au moins une équation de signal qui décrit le mouvement rotatif, de définir pour l'au moins une équation de signal au moins un paramètre d'erreur, de diviser une période mécanique du mouvement rotatif en plusieurs périodes de signal électriques (1, 2, 3, 4, 5, 6, 7, 8, 9, 10, 11, 12, 13, 14, 15, 16) de sorte que l'angle mécanique $\theta_m$ corresponde à une des ces périodes de signal conjointement avec un angle électrique $\theta_e$, de déterminer individuellement pour chaque période de signal électrique (1, 2, 3, 4, 5, 6, 7, 8, 9, 10, 11, 12, 13, 14, 15, 16) de la période mécanique au moins une valeur pour l'au moins un paramètre d'erreur, et de former pour chaque période de signal électrique (1, 2, 3, 4, 5, 6, 7, 8, 9, 10, 11, 12, 13, 14, 15, 16) une moyenne comme paramètre de compensation à partir de l'au moins une valeur pour l'au moins un paramètre d'erreur,
**caractérisé en ce**
**qu'**un paramètre de compensation d'une i-ème période de signal électrique (1, 2, 3, 4, 5, 6, 7, 8, 9, 10, 11, 12, 13, 14, 15, 16) est interpolé avec un paramètre de compensation d'une b-ème période de signal électrique contiguë (1, 2, 3, 4, 5, 6, 7, 8, 9, 10, 11, 12, 13, 14, 15, 16), dans lequel pour chaque paramètre de compensation de la i-ème période de signal électrique (1, 2, 3, 4, 5, 6, 7, 8, 9, 10, 11, 12, 13, 14, 15, 16) un coefficient de pondération $G_i(\theta_e)$ est utilisé, lequel est dépendant de l'angle électrique $\theta_e$ dans la i-ème période de signal électrique (1, 2, 3, 4, 5, 6, 7, 8, 9, 10, 11, 12, 13, 14, 15, 16).

**10.** Système selon la revendication 9 qui présente un capteur (64) pour la détection du mouvement.

**11.** Système selon la revendication 9 ou 10, dans lequel l'unité de calcul (70) est réalisée afin de réaliser au moins une étape d'un procédé selon l'une quelconque des revendications 1 à 8.

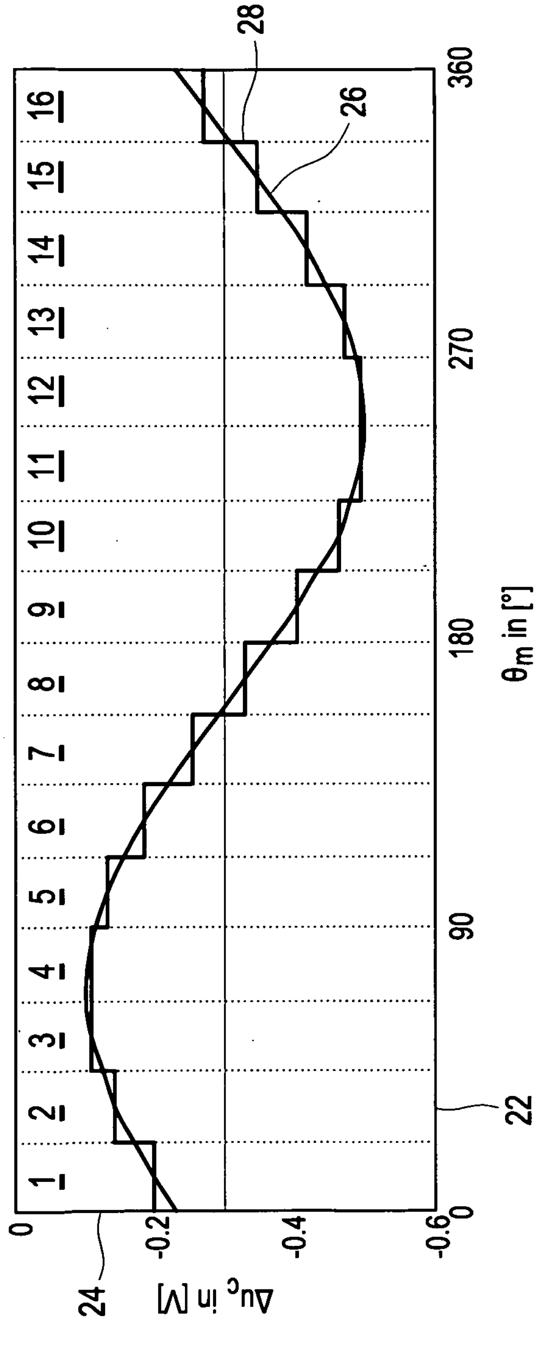
1
2
3
4
5
6
7
8
9
10
11
12
13
14
15
16
0
-0.2
-0.4
-0.6
0
90
180
270
360
Δu_c in [V]
θ_m in [°]
22
24
26
28

Fig. 1 a

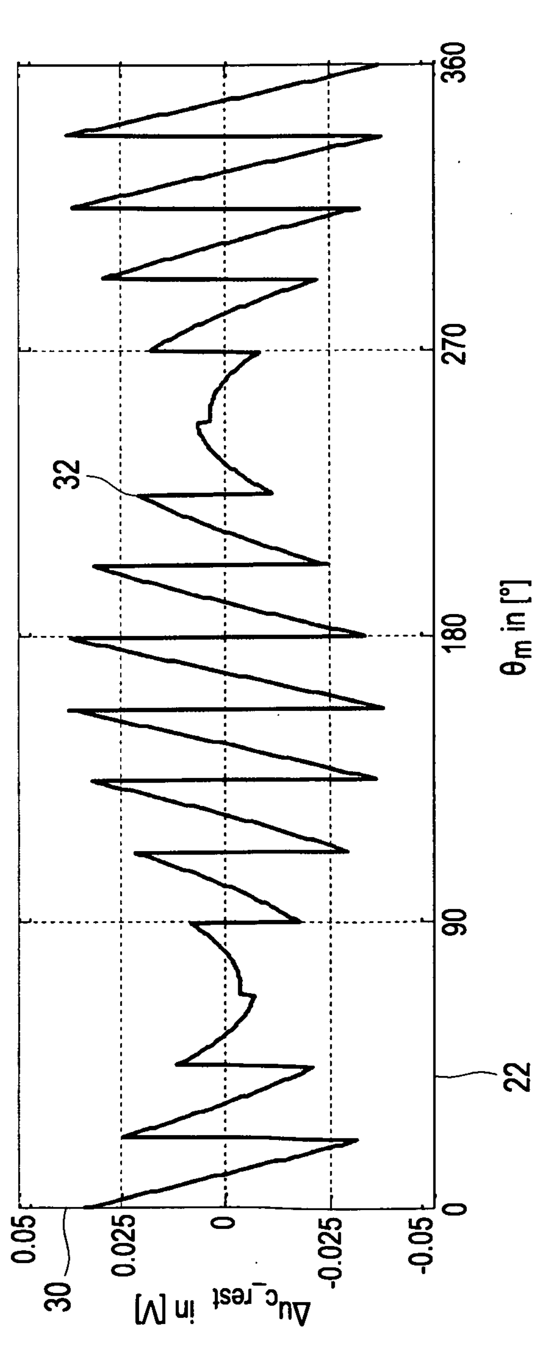
0.05
0.025
0
-0.025
-0.05
0
90
180
270
360
Δu_c_rest in [V]
θ_m in [°]
22
30
32

Fig. 1 b

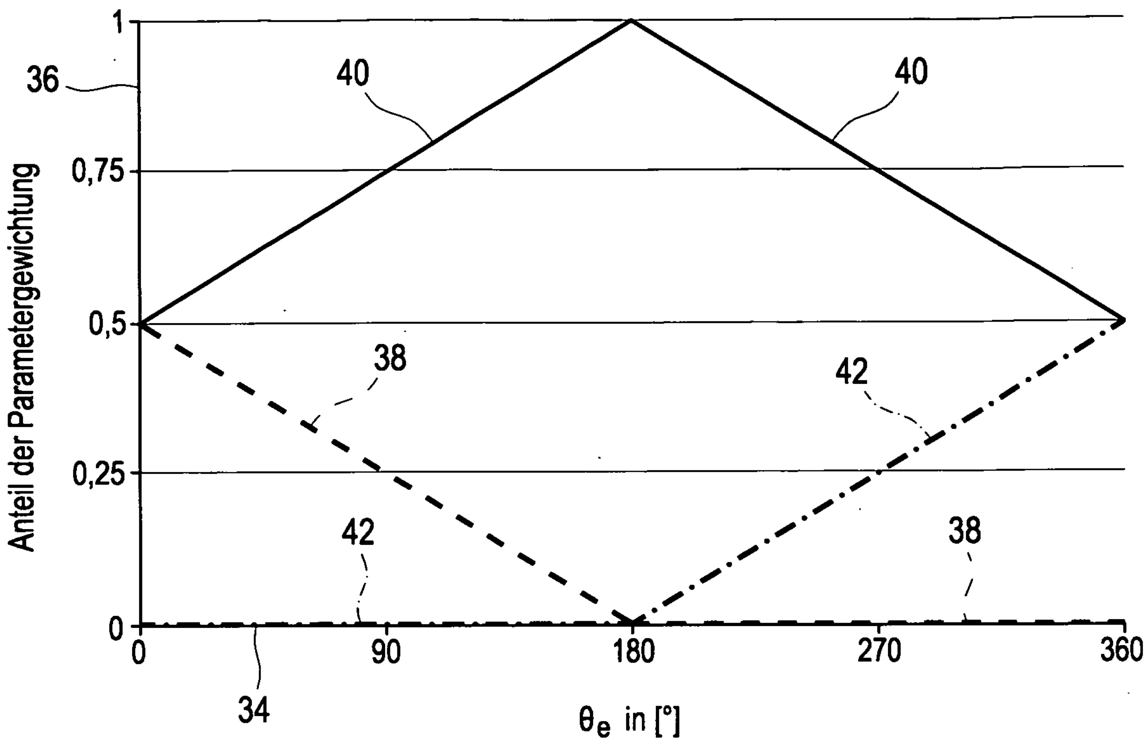
1
36
0,75
0,5
0,25
0
Anteil der Parametergewichtung
40
40
38
42
42
38
0
90
180
270
360
34
θe in [°]

Fig. 2

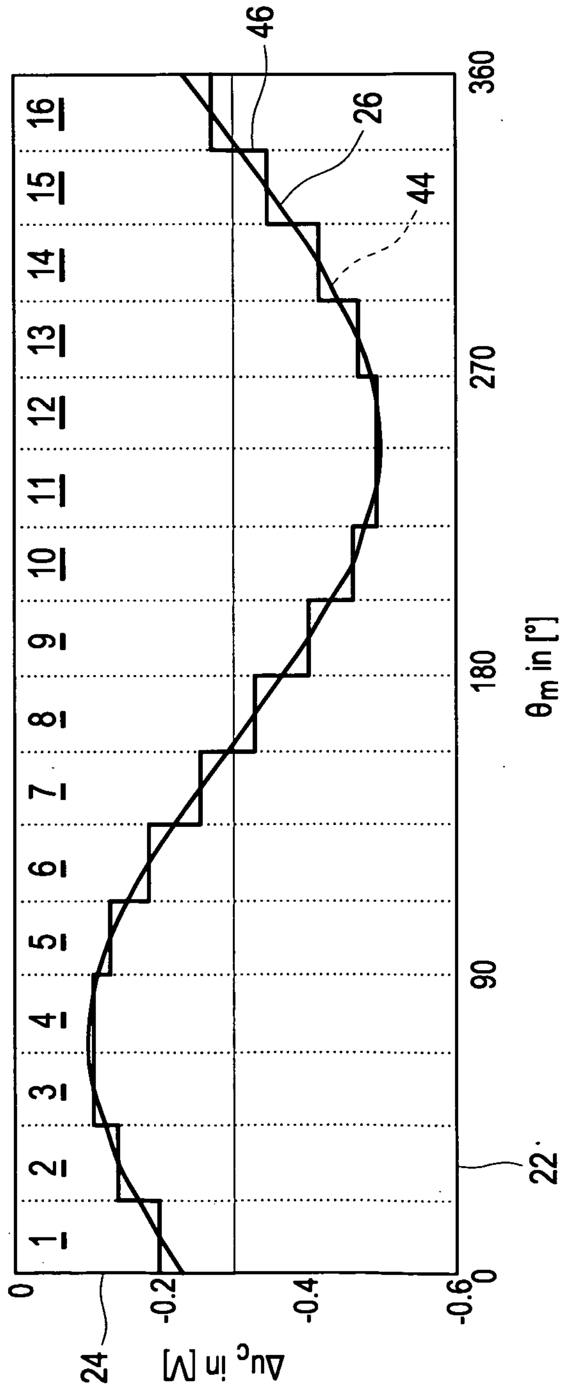
1
2
3
4
5
6
7
8
9
10
11
12
13
14
15
16
0
-0.2
-0.4
-0.6
$\Delta u_c$ in [V]
0
90
180
270
360
$\theta_m$ in [°]
22
24
26
44
46

Fig. 3 a

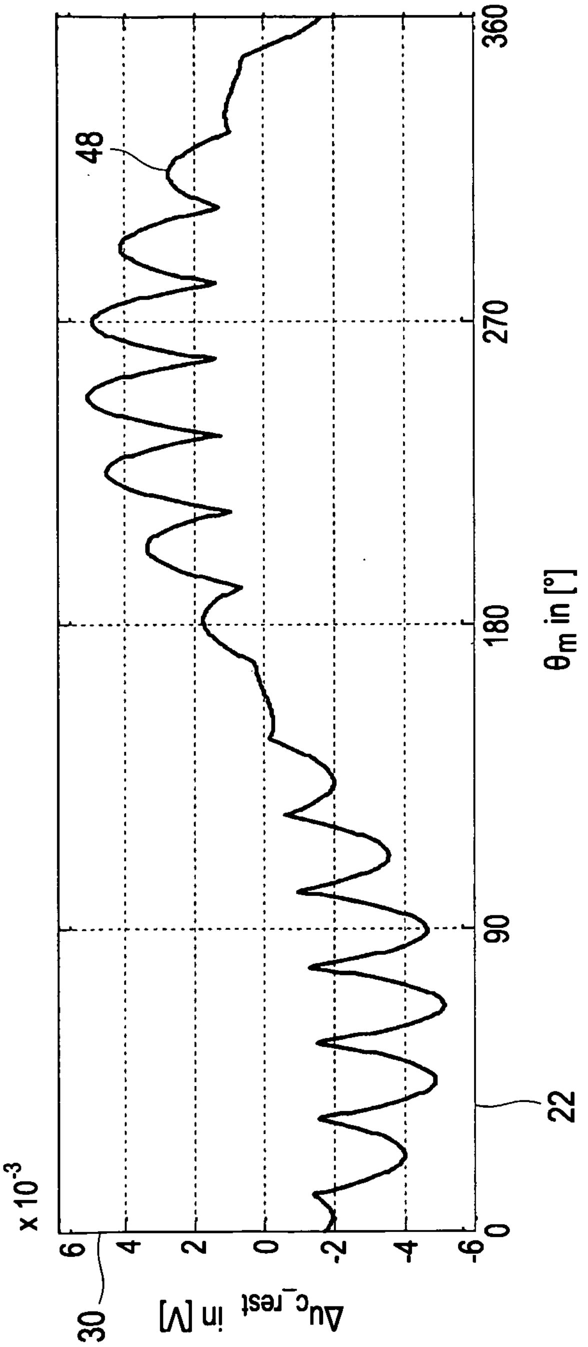
x $10^{-3}$
6
4
2
0
-2
-4
-6
$\Delta u_{c_rest}$ in [V]
0
90
180
270
360
$\theta_m$ in [°]
22
30
48

Fig. 3 b

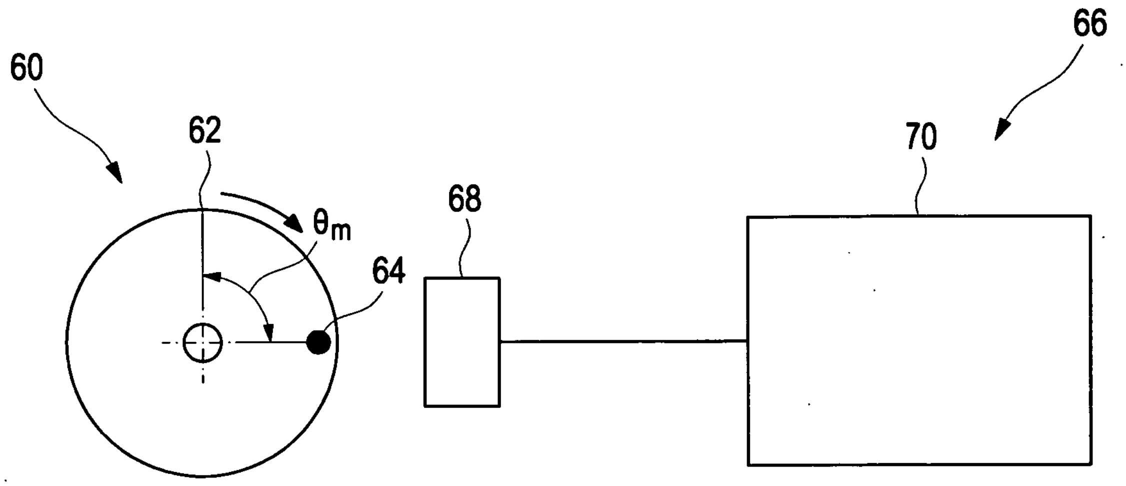


Fig. 4

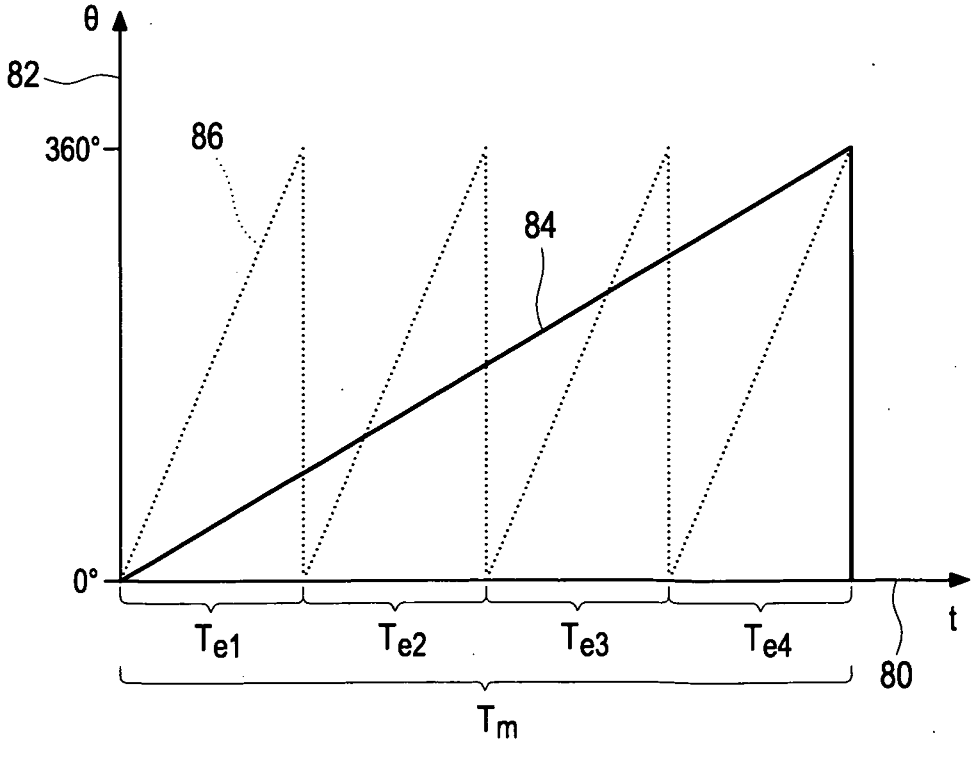


Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10163528 B4
- DE 102009022084 A1
- DE 10049502 A1
- DE 10052609 A1